(19) 

Europäisches Patentamt
European Patent Office
Office européen des brevets

(11) **EP 4 597 076 A1**

(12) **DEMANDE DE BREVET EUROPEEN**

(43) Date de publication:
**06.08.2025 Bulletin 2025/32**

(21) Numéro de dépôt: **25154898.8**

(22) Date de dépôt: **30.01.2025**

(51) Classification Internationale des Brevets (IPC):
**G01N 21/17** $^{(2006.01)}$ **G01N 29/24** $^{(2006.01)}$

(52) Classification Coopérative des Brevets (CPC):
**G01N 21/1702; G01N 29/2418;** G01N 2021/1704

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **31.01.2024 FR 2400920**

(71) Demandeur: **Commissariat à l'Energie Atomique et aux Energies Alternatives
75015 Paris (FR)**

(72) Inventeurs:
- **HANNART, Héloïse**
  **38054 Grenoble Cedex 09 (FR)**
- **JOURDE, Kevin**
  **38054 Grenoble Cedex 09 (FR)**

(74) Mandataire: **INNOV-GROUP
209 Avenue Berthelot
69007 Lyon (FR)**

(54) **PROCÉDÉ DE PARAMÉTRAGE D'UN DÉTECTEUR PHOTOACOUSTIQUE**

(57) Procédé de paramétrage d'un détecteur photoacoustique, le détecteur photoacoustique comportant :
- une chambre de mesure (10), destinée à être occupée par un gaz;
- une source laser (15), configurée pour illuminer le gaz;
- un transducteur acoustique;
- une unité de traitement (20), configurée pour effectuer une démodulation de chaque signal de détection, selon un paramètre de démodulation, et estimer la concentra-tion d'une espèce gazeuse cible;
le procédé étant caractérisé en ce que :
- chaque paramètre d'illumination et/ou chaque paramètre de démodulation forment des paramètres d'acquisition respectivement associés à chaque signal de détection ;
- le procédé comporte une phase de paramétrage, per-mettant de définir au moins un paramètre d'acquisition de façon à minimiser une erreur de mesure.

Fig. 4B

**Description**

## DOMAINE TECHNIQUE

Le domaine technique de l'invention est la détection photoacoustique.

## ART ANTERIEUR

La détection photoacoustique permet une détection d'une faible concentration d'une espèce gazeuse, présente dans un gaz ou mélange de gaz, à l'état de traces. Le principe de fonctionnement repose sur une illumination périodique du gaz à une longueur d'onde correspondant à une bande spectrale d'absorption de l'espèce gazeuse recherchée. L'illumination peut être impulsionnelle ou de façon plus générale, modulée en amplitude et/ou en longueur d'onde, selon une fréquence de modulation prédéterminée. L'illumination conduit à un échauffement périodique du gaz, ce dernier générant une onde de pression. L'onde de pression est détectée par un transducteur acoustique. Ainsi, la détection de l'onde acoustique permet de quantifier une concentration de l'espèce gazeuse dans le gaz analysé. La détection photoacoustique permet la conception de capteurs de gaz compacts pour des utilisations dans le domaine industriel ou le médical.

Généralement, l'illumination est effectuée dans une longueur d'onde dans le domaine du proche ou moyen infra-rouge, typiquement entre $0.8$ $\mu$m et $12$ $\mu$m. Ces longueurs d'onde correspondent à des absorptions vibrationnelles (pures ou composées) de liaisons chimiques spécifiques contenues dans la ou les molécules de gaz (par exemple : C-H, C-O, N-H, S-O, C-C, C-F...). Des longueurs d'onde visibles ou ultra-violettes sont aussi utilisées pour des gaz qui n'ont pas de réponse spectrale efficace dans la gamme infrarouge (on utilisera par exemple l'ozone dont l'absorption la plus forte se trouve en bande UV-C autour de $0.25\mu$m).

L'illumination est modulée en amplitude et/ou en longueur d'onde selon une fréquence de modulation généralement comprise entre 100 Hz et 50 kHz. La fréquence de modulation dépend notamment de la géométrie d'une chambre de mesure, occupée par le gaz analysé. L'illumination peut faire l'objet d'un balayage en longueur d'onde, ce qui permet d'adresser successivement différentes espèces gazeuses.

La détermination de la concentration de l'espèce gazeuse suppose une phase de démodulation du signal de détection résultant du transducteur photoacoustique. La démodulation est effectuée selon une harmonique, correspondant à la fréquence de modulation ou à un multiple entier de la fréquence de modulation.

La publication Huan Binglian et al « Sensitivity dependence of optical parameters in a photoacoustic cell analyzed with a 2-D thermoelastic approximation", Optics communications, vol. 497, 2 juin 2021, décrit une modélisation du rapport signal sur bruit d'un signal photoacoustique, incluant une modélisation d'un signal de bruit de fond dû à la fenêtre transparente tranversée par le faisceau laser. Cette fenêtre subit une expansion thermique, ce qui génère un bruit de fond.

La publication Li Yafei et al "Highly Sensitve near-infrared gas sensor system using a novel H-type resonance-enhanced multip-pass photoacoustic cell", Institute of measurement and control., London, vol. 220, 25 july 2023, décrit un dispositif de détection par effet acoustique dit « muti pass » au sens où le faisceau lumineux émis par chaque source laser est renvoyé par deux miroirs concaves d'un détecteur photoacoustique. Cette publication décrit une optimisation du rapport signal sur bruit en fonction de l'amplitude de modulation en utilisant séparément deux longueurs d'onde différentes, respectivement assignées à la détection de deux espèces gazeuses différentes, en l'occurrence $CO_2$ et $CH_4$.

La publication Holthoff E. et al « Development of a MEMS-Scale Photoacouctis chemical sensor using a quantum cascade laser », IEEE Sensors journal, USA, vol. 10, n°3, 24 february 2010, décrit des comparaisons de performances de détection de DMMP (Dimethylmethylphosphonate), en faisant varier la longueur d'onde d'une source laser QCL, et en comparant deux modalités d'illumination : illumination modulée en amplitude et illumination impulsionnelle.

Généralement, les paramètres de modulation de l'illumination et de démodulation du signal résultant du transducteur acoustique sont définis de façon empirique. Les inventeurs proposent une détermination de paramètres de modulation ou de démodulation, de façon à optimiser les performances de détection. L'invention adresse particulièrement une configuration selon laquelle le gaz analysé comporte plusieurs espèces gazeuses, absorbant la lumière dans une même bande spectrale.

## EXPOSE DE L'INVENTION

Un premier objet de l'invention est un procédé de paramétrage d'un détecteur photoacoustique, le détecteur photoacoustique comportant :

- une chambre de mesure, destinée à être occupée par un gaz, le gaz comportant au moins une espèce gazeuse cible dont on souhaite déterminer une concentration ;

- une source laser, configurée pour illuminer le gaz, la source laser étant modulée en puissance d'émission et/ou en longueur d'onde, la puissance d'émission et sa modulation temporelle étant définies par au moins un paramètre d'illumination ;
- un transducteur acoustique, configuré pour former un signal de détection ou plusieurs signaux de détection successifs, chaque signal de détection étant représentatif d'une modulation d'une pression dans la chambre de mesure, sous l'effet de la modulation de la source laser ;
- une unité de traitement, configurée pour effectuer une démodulation de chaque signal de détection, selon un paramètre de démodulation, et estimer la concentration de l'espèce gazeuse cible;

le procédé étant caractérisé en ce que :

- chaque paramètre d'illumination et/ou chaque paramètre de démodulation forment des paramètres d'acquisition respectivement associés à chaque signal de détection ;
- le procédé comporte une phase de paramétrage, mise en oeuvre par l'unité de traitement, ou par une unité de paramétrage, comportant les étapes suivantes :

    (a) définition d'une erreur de mesure en fonction d'au moins un paramètre d'acquisition ;
    (b) détermination d'au moins un paramètre d'acquisition minimisant l'erreur de mesure ;
    (c) pour chaque signal de détection, sélection de chaque paramètre d'acquisition déterminé lors de l'étape (b).

Par détermination d'un paramètre d'acquisition, on entend une détermination d'une valeur du paramètre d'acquisition ou d'un type de paramètre d'acquisition : Il peut notamment s'agir d'une valeur d'un paramètre d'illumination ou d'un type de paramètre de démodulation. Selon une possibilité :

- l'unité de traitement est configurée pour estimer la concentration de l'espèce gazeuse cible en utilisant plusieurs signaux de détection ;
- au moins un paramètre d'acquisition d'un signal de détection est différent du paramètre d'acquisition d'un autre signal de détection.

Ainsi, chaque signal de détection est obtenu de façon différente d'au moins un autre signal de détection, voire des autres signaux de détection : l'illumination est différente et/ou la démodulation est différente.
Selon une possibilité :

- lors de l'étape a), l'erreur de mesure dépend de la concentration de l'espèce gazeuse cible ;
- lors de l'étape b), la minimisation de l'erreur est effectuée pour plusieurs plages de concentrations de l'espèce gazeuse cible ;
- lors de l'étape c), au moins un paramètre d'acquisition est différent pour deux plages de concentrations de l'espèce gazeuse cible.

Selon une possibilité, pour chaque signal de détection, les paramètres d'acquisition comportent au moins :

- une puissance d'émission de la source laser ;
- et/ou une amplitude de modulation de la puissance d'émission de la source laser ;
- et/ou une harmonique de démodulation du signal de détection.

L'harmonique de démodulation peut être choisie parmi une première harmonique, à la fréquence de modulation, ou une deuxième harmonique, à deux fois la fréquence de modulation.
Selon une possibilité :

- l'unité de traitement prend en compte deux signaux de détection pour estimer la concentration de l'espèce gazeuse cible ;
- chaque signal de détection est démodulé selon la première harmonique ;
- les paramètres d'illumination pour chaque signal de détection sont différents. La puissance d'émission et/ou l'amplitude de modulation de la puissance d'émission peuvent être différents pour chaque signal de détection.

Selon une possibilité, les étapes a) à c) sont mises en oeuvre en considérant au moins deux de signaux de détection démodulés par l'unité de traitement pour estimer la concentration de l'espèce gazeuse cible.
L'étape c) peut être mise en oeuvre en utilisant des fonctions de réponse établies pour chaque espèce gazeuse, en fonction d'au moins un paramètre d'acquisition.

Selon un mode de réalisation, le gaz comporte l'espèce gazeuse cible et une autre espèce gazeuse, dite interférente, l'espèce gazeuse cible et l'espèce gazeuse interférente absorbant la lumière dans une même bande spectrale d'absorption. L'erreur de mesure peut dépendre de la concentration de l'espèce gazeuse cible et de la concentration de l'espèce gazeuse interférente. Selon un mode de réalisation, l'erreur de mesure dépend de la concentration de l'espèce gazeuse cible et de la concentration de l'espèce gazeuse interférente.

Selon un mode de réalisation, l'étape c) est mise en oeuvre en utilisant des fonctions de réponse établies pour l'espèce gazeuse cible et pour l'espèce gazeuse interférente, en fonction d'au moins un paramètre d'acquisition.

Un deuxième objet de l'invention est un détecteur photoacoustique, comportant :

- une chambre de mesure, destinée à être occupée par un gaz, le gaz comportant au moins une espèce gazeuse cible dont on souhaite déterminer la concentration ;
- une source laser, configurée pour illuminer le gaz, la source laser étant modulée en puissance d'émission et/ou en longueur d'onde, la puissance d'émission de la source laser et sa modulation temporelle étant définies par au moins un paramètre d'illumination ;
- un transducteur acoustique, configuré pour former un signal de détection ou plusieurs signaux de détection successifs, chaque signal de détection étant représentatif d'une modulation d'une pression dans la chambre de mesure, sous l'effet de la modulation de la source laser ;
- une unité de traitement, configurée pour effectuer une démodulation de chaque signal de détection, de façon à estimer la concentration de l'espèce gazeuse cible, la démodulation du signal étant définie par un paramètre de démodulation ;
- le détecteur étant caractérisé en ce qu'un paramètre d'acquisition, choisi parmi un paramètre d'illumination et/ou un paramètre de démodulation est défini en mettant en oeuvre les étapes a) à c) d'un procédé selon le premier objet de l'invention.

Un troisième objet de l'invention est un détecteur photoacoustique, comportant :

- une chambre de mesure, destinée à être occupée par un gaz, le gaz comportant au moins une espèce gazeuse cible dont on souhaite déterminer la concentration ;
- une source laser, configurée pour illuminer le gaz, la source laser étant modulée en puissance d'émission et/ou en longueur d'onde, la puissance d'émission la source laser et sa modulation temporelle étant définies par au moins un paramètre d'illumination ;
- un transducteur acoustique, configuré pour former plusieurs signaux de détection successifs, chaque signal de détection étant représentatif d'une modulation d'une pression dans la chambre de mesure, sous l'effet de la modulation de la source laser ;
- une unité de traitement, configurée pour effectuer une démodulation de chaque signal de détection, pour estimer la concentration de l'espèce gazeuse cible, la démodulation du signal étant définie par un paramètre de démodulation ;
- le détecteur étant caractérisé en ce qu'un paramètre d'acquisition, choisi parmi un paramètre d'illumination et/ou un paramètre de démodulation est différent pour deux signaux de détection successifs.

Un quatrième objet de l'invention est un procédé d'estimation d'une concentration d'une espèce gazeuse cible, à l'aide d'un détecteur photoacoustique selon le deuxième ou le troisième objet de l'invention, le procédé comportant :

- (i) illumination du gaz occupant la chambre de mesure à l'aide de la source laser, selon un paramètre d'illumination ;
- (ii) durant l'étape (i), formation d'un signal de détection par le transducteur acoustique ;
- (iii) démodulation d'un ou plusieurs signaux de détection, chaque signal de détection étant démodulé selon un paramètre de démodulation, de façon à estimer une concentration de l'espèce gazeuse cible ;

le procédé étant tel que :

- chaque paramètre d'illumination et chaque paramètre de démodulation forment des paramètres d'acquisition de chaque signal de détection ;
- les paramètres d'acquisition de chaque signal de détection sont définis pour différentes plages de concentration de l'espèce gazeuse cible ;

le procédé comporte une réitération des étapes (i) à (iii), de façon que

- lors d'une première itération, les paramètres d'acquisition sont initialisés arbitrairement ou selon un a priori relatif à la concentration de l'espèce gazeuse cible ;

- lors d'une deuxième itération, les paramètres d'acquisition sont sélectionnés en fonction de la concentration de l'espèce gazeuse cible résultant de l'itération précédente.

L'invention sera mieux comprise à la lecture de l'exposé des exemples de réalisation présentés, dans la suite de la description, en lien avec les figures listées ci-dessous.

### FIGURES

La figure 1 décrit un exemple de détecteur photoacoustique.

La figure 2A représente des caractéristiques électro-optiques d'une source laser. Il s'agit ici de la puissance optique d'un faisceau laser émis par la source laser (axe des ordonnées de gauche - unité mW) ainsi que le nombre d'onde du faisceau laser (axe des ordonnées de droite : unité $cm^{-1}$) en fonction de l'intensité d'un courant d'alimentation de la source laser.

La figure 2B montre les bandes spectrales d'absorption de deux espèces gazeuses en fonction du nombre d'onde (axe des abscisses - $cm^{-1}$). L'axe des ordonnées correspond à un coefficient linéaire d'absorption (axe des ordonnées - $cm^{-1}$).

La figure 3 montre une évolution d'une erreur relative $\frac{\sigma_{det}}{c_{det}}$ (axe des ordonnées) en fonction de la concentration $c_{det}$ d'une espèce gazeuse cible (axe des abscisses - ppm), ainsi que l'évolution de différentes composantes de l'erreur relative.

La figure 4A montre une évolution d'une erreur relative $\frac{\sigma_{det}}{c_{det}}$ (axe des ordonnées) en fonction de la concentration $c_{det}$ d'une espèce gazeuse cible (axe des abscisses - $cm^{-1}$), et cela pour différentes configurations d'acquisition.

La figure 4B représente une évolution de la composante continue (axe des ordonnées de gauche - unité A) et de l'amplitude de la composante de modulation (axe des ordonnées de droite - unité A) du courant d'alimentation d'un laser en fonction de la concentration $c_{det}$ d'une espèce gazeuse cible (axe des abscisses - ppm).

La figure 4C représente une évolution d'un coefficient de réponse (niveau de gris) d'un détecteur photoacoustique pour une espèce gazeuse, en l'occurrence GB, en fonction de l'intensité de la composante continue (axe des ordonnées - unité A) et de l'amplitude de la composante de modulation (axe des abscisses - unité A) du courant d'alimentation d'un laser.

La figure 4D représente une évolution d'un coefficient de réponse (niveau de gris) d'un détecteur photoacoustique pour une autre espèce gazeuse, en l'occurrence $CO_2$, en fonction de l'intensité de la composante continue (axe des ordonnées - unité A) et de l'amplitude de la composante de modulation (axe des abscisses - unité A) du courant d'alimentation d'un laser.

La figure 5A montre un ratio d'une erreur de mesure (axe des ordonnées) en fonction de la concentration d'une espèce cible (axe des abscisses - ppm) en prenant respectivement en compte des paramètres d'acquisition différents.

La figure 5B montre une évolution de l'erreur relative de mesure (axe des ordonnées) en fonction de la concentration d'une espèce cible (axe des abscisses - ppm), pour deux configurations de mesure.

La figure 6 schématise les principales étapes d'un procédé selon l'invention.

### EXPOSE DE MODES DE REALISATION PARTICULIERS

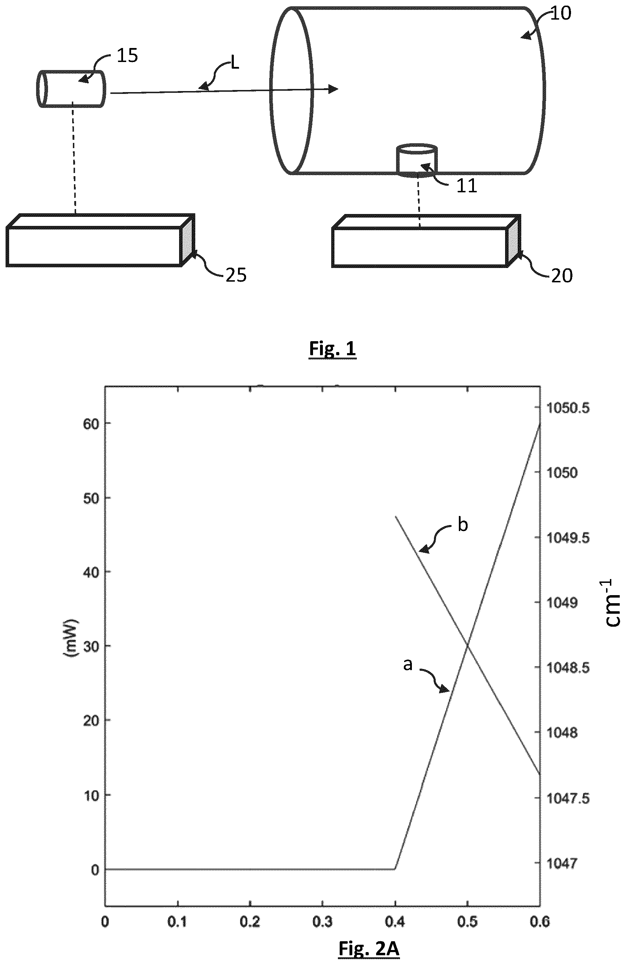

La figure 1 représente un détecteur photoacoustique 1. Le dispositif comporte une chambre de mesure 10 configurée pour être occupée par un gaz à analyser. La chambre de mesure 10 est configurée pour être exposée à un faisceau laser L modulé en amplitude et/ou en fréquence selon une fréquence de modulation *f*. Le faisceau laser L est émis à une longueur d'onde correspondant à une longueur d'onde d'absorption d'une espèce gazeuse susceptible d'être présente dans le gaz. Sous l'effet de l'absorption, le gaz illuminé s'échauffe, l'échauffement étant modulé selon la fréquence de modulation du faisceau laser. L'échauffement modulé entraîne une succession de compressions - dilatations de l'espèce gazeuse. Cela entraîne une variation de pression dans la chambre de mesure. Le faisceau laser est émis par une ou plusieurs sources laser 15.

Le dispositif comporte un transducteur acoustique de mesure 11 permettant une mesure d'une variation de pression $\Delta P(t)$ dans la chambre de mesure sous l'effet de la modulation du faisceau laser. La variation de pression $\Delta P(t)$ est modulée selon la fréquence de modulation *f*.

Le laser est par exemple de type QCL (Laser à cascade quantique), ce type de laser étant bien adapté à une intégration dans des dispositifs de mesure compacts. La longueur d'onde d'émission est l'infra-rouge, typiquement entre 3 et 12 $\mu$m. Dans cette plage spectrale, de nombreuses espèces gazeuses comportent des raies d'absorption.

Le dispositif comporte une unité de traitement 20, configurée pour traiter le signal provenant du détecteur ou de chaque détecteur, en fonction de paramètres de traitement, et d'estimer une concentration de l'espèce gazeuse. L'unité de traitement peut notamment comporter un microprocesseur.

Le dispositif peut comporter une unité de commande 25, configurée pour commander des paramètres d'émission du laser, par exemple la puissance optique ou l'amplitude de la modulation.

La puissance et la longueur d'onde d'émission du laser 15 sont contrôlées par la température et le courant d'alimentation *I*. Ce dernier comporte une composante continue $I_0$ (courant d'offset) et une composante de modulation $I_1$, modulée à la fréquence w. Ainsi, *I*

$$I(t) = I_0 + I_1 \cos(wt) \,(1)$$

L'unité de traitement est reliée au transducteur de mesure et à l'éventuel transducteur de référence. L'unité de traitement est configurée pour former et traiter un signal de détection $S(t)$ représentatif de la variation de pression $\Delta P(t)$ dans la chambre de mesure.

Le signal de détection peut être exprimé sous la forme :

$$S(t) = kP(t)\beta(t) \,(2)$$

où :

- $k$ (mV.cm.W$^{-1}$) est un coefficient de réponse du détecteur pour l'espèce gazeuse considérée ;
- $P(t)$ (W) est la puissance optique du faisceau laser ;
- $\beta(t)$ (cm$^{-1}$) est l'absorption du gaz à la longueur d'onde d'émission du laser.

Le signal de détection $S(t)$ comporte un signal d'offset $S^0$ auxquels s'ajoutent des harmoniques de différents ordres :

$$S(t) = S^0 + S^1 \cos(wt) + S^2 \cos(2wt) \,(3).$$

Où $S^j$ désigne l'harmonique de rang *j*. Chaque harmonique correspond à *j* fois la fréquence de modulation, ou *j* est un entier positif. Dans l'expression (3), on s'est limité aux deux premières harmonique.

La première harmonique $S^1$ peut être considérée comme représentative de la dérivée première de l'absorption de l'espèce gazeuse par rapport à la longueur d'onde. La deuxième harmonique $S^2$ peut être représentative de la dérivée seconde de l'absorption de l'espèce gazeuse par rapport à la longueur d'onde, moyennant une hypothèse d'une variation linéaire du coefficient d'absorption de la molécule dans la modulation appliquée.

L'unité de traitement est configurée pour démoduler le signal de détection, de façon à extraire la première harmonique ou la deuxième harmonique, ou une harmonique de rang supérieur.

La figure 2A représente l'évolution de la puissance d'émission laser d'un exemple de source laser QCL (courbe a : axe des ordonnées de gauche - unité mW) en fonction de l'intensité courant d'alimentation *I(t)* (axe des abscisses - unité A) ainsi que l'évolution du nombre d'onde du faisceau lumineux émis (courbe b : axe des ordonnées de droite - unité cm$^{-1}$) en fonction de *I(t)*. On observe que la modulation du courant d'alimentation *I(t)* entraîne à la fois une modulation de la puissance d'émission et du nombre d'onde. Le seuil d'alimentation laser est de 0.4 A.

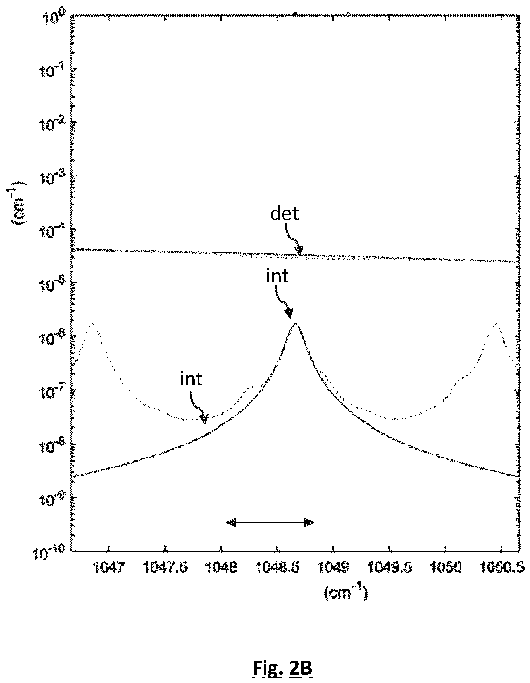

La figure 2B montre deux spectres d'absorption de deux espèces gazeuses susceptibles d'être présentes dans un gaz à détecter, ce dernier étant typiquement de l'air. L'axe des ordonnées correspond à un coefficient d'absorption (cm$^{-1}$) et l'axe des abscisses est le nombre d'onde (cm$^{-1}$). Les deux espèces gazeuses considérées présentent une absorption significative dans la même bande spectrale d'absorption.

Parmi ces deux espèces gazeuses de trouve une espèce gazeuse à détecter, dite espèce gazeuse cible, de concentration $c_{det}$ dans le gaz analysé, et une espèce gazeuse dite interférente, de concentration $c_{int}$ dans le gaz analysé. Dans l'exemple représenté, l'espèce gazeuse à détecter est le gaz Sarin (dénomination internationale Sarine gas - GB), de concentration 1 ppm, et l'espèce gazeuse interférente est le $CO_2$, de concentration 500 ppm. La courbe en pointillés représente le spectre d'absorption de $CO_2$, ce dernier pouvant être modélisé, dans une bande spectrale étroite, de l'ordre de 1 cm$^{-1}$, par une fonction Lorentzienne (courbe en trait plein). La double flèche montre un exemple de variation du nombre d'onde durant la modulation du courant d'alimentation du laser.

Dans cet exemple, nous disposons de deux espèces gazeuses : une espèce « cible », à détecter, mélangée à une espèce interférente. Afin d'abaisser la limite de détection, $N$ signaux de détection successifs $S_i$ peuvent être acquis, $N$ étant supérieur ou égal à 2. Le fait d'abaisser la limite de détection en accumulant des signaux de détection est une démarche connue.

Chaque signal de détection $S_i$ est paramétré par des paramètres d'acquisition, qui agissent sur l'illumination du gaz par le laser et le traitement du signal de détection, plus précisément la démodulation. Les paramètres d'acquisition comprennent :

- l'intensité du courant d'offset $I_{0,i}$ ;
- l'intensité du courant de modulation $I_{1,i}$ ;
- l'harmonique $h_i$ prise en compte lors de la démodulation : première harmonique ou deuxième harmonique, ou harmonique de rang supérieur. La valeur de $h_i$ est $j$, ou $j$ désigne le rang de l'harmonique précédemment défini en lien avec (3).

Un aspect important de l'invention est qu'au moins deux signaux de détection peuvent être acquis en prenant en compte au moins un paramètre d'acquisition différent.

Chaque signal de détection $S_i$ peut être explicité selon l'expression (2), en prenant en compte une hypothèse de linéarité à l'égard des concentrations $c_{det}$ et $c_{int}$.

$$S_i = k_{det,i}\left(I_{0,i}, I_{1,i}, h_i\right)c_{det} + k_{int,i}\left(I_{0,i}, I_{1,i}, h_i\right)c_{int} \quad (4)$$

Où $k_{det,i}$ et $k_{int,i}$ sont les coefficients de réponse du détecteur pour les paramètres d'acquisition ($I_{0,i}$, $I_{1,i}$, $h_i$), respectivement à l'égard de l'espèce cible et l'espèce interférente.

En prenant en compte $N$ signaux de détection, on obtient un modèle direct :

$$\begin{bmatrix} S_1 \\ \vdots \\ S_N \end{bmatrix} = \begin{bmatrix} k_{det,1} & k_{int,1} \\ \vdots & \vdots \\ k_{det,N} & k_{int,N} \end{bmatrix} \begin{bmatrix} c_{det} \\ c_{int} \end{bmatrix} = G \begin{bmatrix} c_{det} \\ c_{int} \end{bmatrix} \quad (5)$$

$G$ est une matrice de réponse du détecteur pour l'ensemble des $N$ paramètres respectivement associés à chaque signal de détection, de dimension ($N$, 2). La matrice de réponse dépend des paramètres d'acquisition. L'obtention des concentrations $\begin{bmatrix} c_{det} \\ c_{int} \end{bmatrix}$ est effectuée par inversion du modèle direct, par exemple par une méthode de type moindres carrés. L'inversion du modèle direct est effectuée par l'unité de traitement 20.

Les développements qui suivent visent à déterminer une variable $\sigma_{det}$, dont la minimisation permet de définir les paramètres d'acquisition optimums pour l'espèce gazeuse cible. La variable $\sigma_{det}$ (unité ppm) est une erreur d'estimation de la concentration $c_{det}$. $\sigma_{det}$ comporte trois composantes, décrites par la suite :

- $\sigma_e$ est la variance du bruit de la chaine de mesure, qui comporte le transducteur acoustique 15, la démodulation mise en oeuvre par l'unité de traitement, la conversion analogique numérique. Le bruit de la chaine de la mesure est considéré comme suivant une distribution gaussienne, de variance $\sigma_e$. La variance $\sigma_e$ est indépendante de la concentration des espèces gazeuses. Le bruit de la chaine de mesure est un terme additif dans le signal de détection. $\sigma_e$ peut par exemple être pris égal à 10 μV.
- $\sigma_I$ (unité mV), correspond au bruit de mesure, résultant de l'alimentation électrique de la source de lumière laser. Le bruit $\sigma_I$ comporte deux composantes, qui correspondent respectivement à la composante continue $I_0$ et à la composante de modulation $I_1$. En dérivant (2) à par rapport à $I_0$ et à $I_1$, et en prenant en compte une valeur maximale $c_{int}^{max}$ de l'espèce gazeuse interférente, on obtient les expressions (6) et (7). $c_{int}^{max}$ est préalablement déterminée.

Il s'agit d'une valeur d'une concentration maximale de $c_{int}$.

$$\sigma_{I_0} = \sigma_{s,I_0}\left(\left|\frac{\partial k_{\det}}{\partial I_0}\right|c_{\det} + \left|\frac{\partial k_{int}}{\partial I_0}\right|c_{int}^{max}\right) \text{ (6)}$$

$$\sigma_{I_1} = \sigma_{s,I_1}\left(\left|\frac{\partial k_{\det}}{\partial I_1}\right|c_{\det} + \left|\frac{\partial k_{int}}{\partial I_1}\right|c_{int}^{max}\right) \text{ (7)}$$

et

$$\sigma_I = \sqrt{\sigma_{I_0}{}^2 + \sigma_{I_1}{}^2} \text{ (8)}$$

$\sigma_{s,I_0}$ et $\sigma_{s,I_1}$ sont respectivement les variances des bruits associés aux composantes $I_0$ et $I_1$, ces bruits sont considérés comme suivant une distribution gaussienne centrée. On peut prendre par exemple $\sigma_{s,I_0}$ = 2mA et $\sigma_{s,I_1}$ = 1 mA.

Dans le cas du $CO_2$ dans de l'air ambiant, $c_{int}^{max}$ = 10000 ppm. Cette concentration est à comparer avec les concentrations usuellement rencontrées à dans un air non pollué, à l'extérieur (500 ppm) ou dans une pièce habitée fermée (2000 ppm).

- $\varepsilon_{int}$ est un bruit additif résultant de la présence de l'espèce interférente. Il ne s'agit pas d'un bruit statistique, mais d'une composante additive, considérée comme un biais.

$$\epsilon_{int} = |k_{int}|c_{int}^{max} \text{ (9)}$$

Les trois composantes $\sigma_I$, $\sigma_e$ et $\varepsilon_{int}$ sont combinées pour former $\sigma_{det}$ selon :

$$\sigma_{det} = \frac{\sqrt{\frac{\sigma_I^2+\sigma_e^2}{N}}+\epsilon_{int}}{k_{\det}} \text{ (10)}$$

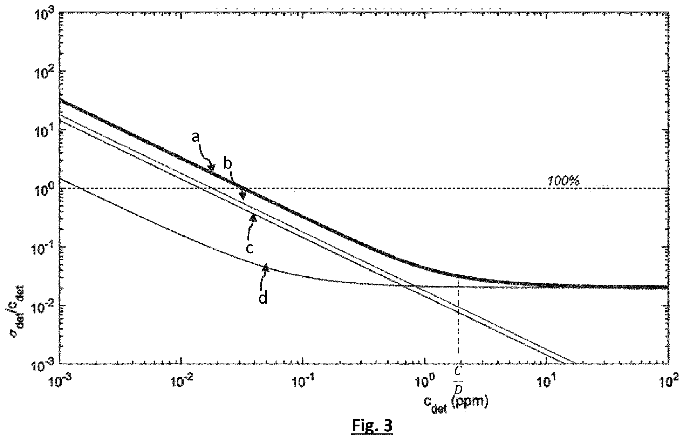

Sur la figure 3, on a représenté (courbe a) un ratio de l'erreur relative $\frac{\sigma_{det}}{c_{det}}$ (axe des ordonnées) en fonction de $c_{det}$ (axe des abscisses - unité ppm), en prenant en compte $N$ = 1, h = 1 (première harmonique), $I_0$ = 0.44$A$, $I_1$ = 0.048$A$.

La figure 3 représente également différentes contributions à $\frac{\sigma_{det}}{c_{det}}$ :

- courbe b : $\frac{\epsilon_{int}}{c_{det}}$, en fonction de $c_{det}$
- courbe c : $\frac{\sigma_e}{c_{det}}$, en fonction de $c_{det}$
- courbe d : $\frac{\sigma_I}{c_{det}}$, en fonction de $c_{det}$

Sur la figure 3, on a également représenté une courbe 100%, pour laquelle l'erreur relative $\frac{\sigma_{det}}{c_{det}}=1$, formant une limite d'utilisation. On considère qu'il n'est pas envisageable de procéder à des mesures pour $\frac{\sigma_{det}}{c_{det}} \geq 1$

On peut définir deux plages sur la courbe représentant l'erreur relative $\frac{\sigma_{det}}{c_{det}}$ en fonction de $c_{det}$ : sur une première plage, correspondant aux faibles concentrations $c_{det}$, $\frac{\sigma_{det}}{c_{det}}$ tend vers $\frac{\sigma_{det}}{C}$, ce qui signifie que $c_{det}$ tend vers une constante $C$, telle que

$$C = \frac{\sqrt{\sigma_e{}^2 + \left(c_{int}^{max}\left(\sigma_{s,I_0}\left|\frac{\partial k_{int}}{\partial I_0}\right| + \sigma_{s,I_1}\left|\frac{\partial k_{int}}{\partial I_1}\right|\right)\right)^2 + \epsilon_{int}}}{k_{\det}} \quad (11)$$

Sur une deuxième plage, qui correspond aux concentrations élevées $c_{det}$, l'erreur relative $\frac{\sigma_{det}}{c_{det}}$ tend vers une autre constante *D,* telle que :

$$D = \frac{\sigma_{s,I_0}\left|\frac{\partial k_{\det}}{\partial I_0}\right| + \sigma_{s,1}\left|\frac{\partial k_{\det}}{\partial I_1}\right|}{k_{\det}} \quad (12)$$

Aux concentrations élevées, la source d'erreur prédominante est $\frac{\sigma_I}{c_{det}}$.

On peut définir une concentration limite $c_{det}^*$, entre les faibles concentrations et les concentrations élevées, telle que : $c_{det}^* \approx \frac{C}{D}S$

En prenant en compte *N* signaux de détection $S_i$ respectivement paramétrés par au moins un paramètre d'acquisition différent, on peut écrire

$$\begin{bmatrix} \sigma_{det}{}^2 & \sigma_{det,int}{}^2 \\ \sigma_{det,int}{}^2 & \sigma_{int}{}^2 \end{bmatrix} = (G^t \Sigma^{-1} G)^{-1} \quad (15),$$

avec :

G est la matrice de réponse du détecteur, de dimension (*N*, 2), telle que définie en lien avec (5) ;
$\sigma_{int}$ est l'équivalent de $\sigma_{det}$ pour l'espèce d'intérêt. Elle est calculée en mettant en oeuvre les expressions (6) à (10) en prenant en compte une concentration maximale $c_{det}^{max}$ pour l'espèce à détecter ;
$\sigma_{det,int}$ sont des termes de corrélation ;
Σ est une matrice de covariance de mesures, diagonale, de dimensions (*N, N),* telle que

$$\Sigma = \begin{bmatrix} s_{1,1} & \ldots & 0 \\ \vdots & \ddots & \vdots \\ 0 & \ldots & s_{N,N} \end{bmatrix} \quad (16), \text{ avec } s_{i,i} = \sigma_e{}^2 + \sigma_{I,i}{}^2 \quad (17).$$

L'unité de $s_{i,i}$ est mV$^2$.
$\sigma_{I,i}{}^2$ est le terme $\sigma_I$ pour la mesure de rang *i,* avec $1 \le i \le N$

Dans la matrice Σ, les termes croisés $s_{i,j}$ avec $i \neq j$, sont nuls car les mesures sont indépendantes.
A partir de (15), en prenant en compte le fait que la matrice $(G^t \Sigma^{-1} G)$ est inversible pour $N \ge 2$, on obtient, pour *N* = 2 :

$$\sigma_{det}{}^2 = \frac{\frac{k_{int,1}{}^2}{s_{1,1}} + \frac{k_{int,2}{}^2}{s_{2,2}}}{\left(\frac{k_{det,1}{}^2}{s_{1,1}} + \frac{k_{det,2}{}^2}{s_{2,2}}\right)\left(\frac{k_{int,1}{}^2}{s_{1,1}} + \frac{k_{int,2}{}^2}{s_{2,2}}\right) - \left(\frac{k_{det,1}k_{int,1}}{s_{1,1}} + \frac{k_{det,2}k_{int,2}}{s_{2,2}}\right)^2} \quad (18)$$

$k_{\det,i}$ et $k_{int,i}$ sont les réponses du détecteur pour les paramètres $(I_{0,i}, I_{1,i}, h_i)$ respectivement à l'égard de l'espèce cible et l'espèce interférente, décrits en lien avec l'expression (5).
Dans l'expression (18), $\sigma_{det}$ dépend de $c_{det}$ par le terme $\sigma_{I,i}$ pris en compte dans $s_{i,i}$, cf. expressions (17), (10), et (6) à (8).
L'expression (18) permet de définir une configuration de mesure permettant de minimiser $\sigma_{det}$. Par configuration de mesure, on entend les paramètres de mesure $(I_{0,i}, I_{1,i}, h_i)$ pour chacune des N mesures. Dans cet exemple, N = 1 ou N = 2.

Autrement dit,

$$\left(I_{0,i}, I_{1,i}, h_i\right) = \underset{I_{0,i}, I_{1,i}, h_i}{\mathrm{argmin}}(\sigma_{det} \quad) \quad (19)$$

, le nombre $N$ étant préalablement fixé.

Les paramètres d'acquisition optimaux sont ceux minimisant $\sigma_{det}$. Ils sont obtenus en mettant en oeuvre un algorithme de minimisation. L'algorithme de minimisation utilise des valeurs mémorisées de $k_{int,i}$ et $k_{det,i}$. On rappelle que lorsqu'on extrait la première harmonique, on considère, en première approximation, que $k_{int}$ et $k_{det}$ dépendent de la dérivée de l'absorption en fonction de la longueur d'onde. Lorsqu'on extrait la deuxième harmonique, $k_{int}$ et $k_{det}$ dépendent de la dérivée seconde de l'absorption en fonction de la longueur d'onde.

Ainsi, pour chaque harmonique, on dispose de valeurs mémorisées de $k_{int}$ et $k_{det}$, stockées dans la mémoire 21.

Les valeurs $\dfrac{\partial k_{det}}{\partial I_0}, \dfrac{\partial k_{det}}{\partial I_1}, \dfrac{\partial k_{int}}{\partial I_0}, \dfrac{\partial k_{int}}{\partial I_1}$ peuvent être également mémorisées.

Les valeurs de $k_{int}$ et $k_{det}$, ou leurs dérivées par rapport à $I_1$ ou $I_0$ sont obtenus en connaissant les paramètres d'émission de la source laser en fonction de $I_1$ et $I_0$ : nombre d'onde et puissance lumineuse (cf. courbe 2A).

Les données d'entrée de l'algorithme sont $c_{int}^{max}$ (ou une plage de variation de $c_{int}$, une plage de variation de $c_{det}$, $\sigma_e$, $\sigma_{s,I0}$ et $\sigma_{s,I1}$, ces valeurs étant fixées par l'utilisateur en fonction du dispositif utilisé.

Les données d'entrée peuvent également comprendre une plage de variation de $I_1$, de $I_0$, de $N$ ainsi que les harmoniques potentiellement utilisables pour démoduler le signal de détection : harmonique de rang 1, de rang 2 ou éventuellement de rang supérieur.

Exemple d'application

On a mis en oeuvre l'expression (18) pour définir des configurations de mesure optimales en prenant en compte GB (gaz sarin) et $CO_2$ en tant qu'espèce gazeuse cible et espèce gazeuse interférente. Différentes configurations ont été testées. Chaque configuration comportait une seule mesure ($N = 1$) ou deux mesures successives ($N = 2$).

Lorsque $N = 1$, $\sigma_{det}$ a été calculé en fonction de (10). Lorsque $N = 2$, $\sigma_{det}$ a été calculé en fonction de (18), selon l'hypothèse qu'au moins un paramètre de chacune des $N$ mesures est différent.

Cinq configurations ont été testées :

- configuration 1 : $N = 1$ - mesure prenant en compte la première harmonique $h_1$ ;
- configuration 2 : $N = 1$ - mesure prenant en compte la deuxième harmonique $h_2$ ;
- configuration 3 : $N = 2$ - mesures prenant en compte la première harmonique $h_1$ ;
- configuration 4 : $N = 2$ - mesures prenant en compte la deuxième harmonique $h_2$ ;
- configuration 5: $N = 2$ - mesures prenant en compte la première et la deuxième harmonique $h_1$ et $h_2$;
- Nombre d'onde du laser : 1049,665 cm$^{-1}$ ;
- Puissance optique du laser dépendant de l'intensité du courant d'alimentation selon une pente de 0.3 W/A (cf courbe a de la figure 2A) ; cela correspond aux caractéristiques d'un laser QCL commercial.
- Nombre d'onde du faisceau laser dépendant de l'intensité du courant d'alimentation selon une pente de -10 cm$^{-1}$/A. (cf. courbe b de la figure 2A). Il s'agit également d'une caractéristique considérée comme standard pour un laser QCL commercial ;
- $I_0$ variant entre 0.4 et 0.6 A, selon 500 pas de discrétisation régulièrement espacés ;
- $I_1$ variant entre 0.001 et 0.05A selon 250 pas de discrétisation régulièrement espacés ;
- $c_{int}^{max} = 10^4$ ppm ;
- $\sigma_e = 10\ \mu V$ ;
- $\sigma_{s,I0} = 2mA$ ;
- $\sigma_{s,I1} = 1$ mA.

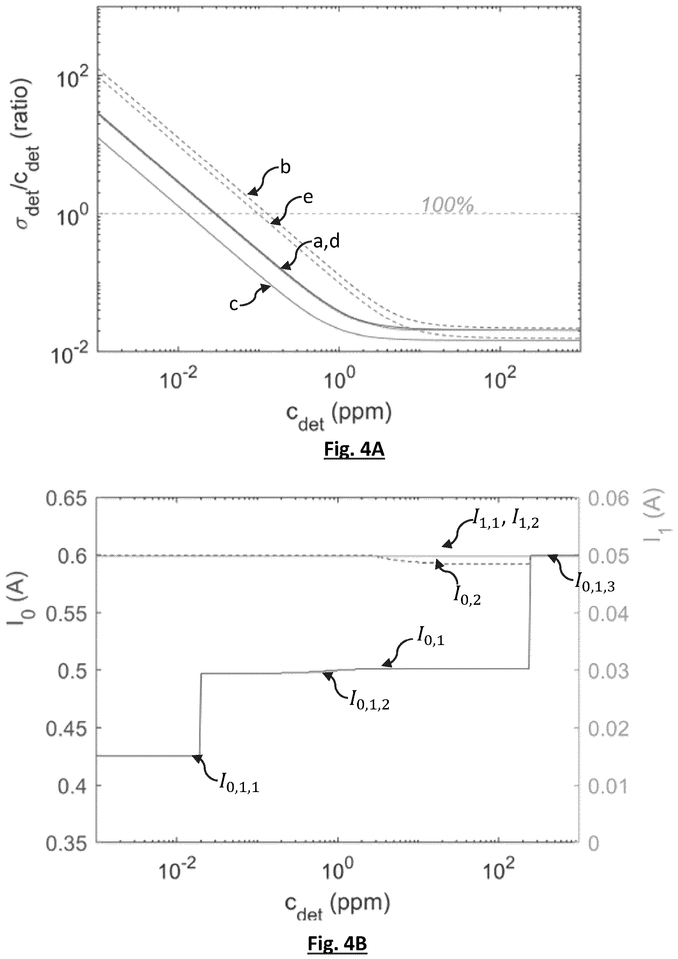

La figure 4A montre l'erreur relative $\dfrac{\sigma_{det}}{c_{det}}$ en fonction de $c_{det}$ pour différentes les différentes configurations testées : courbe a : configuration 1; courbe b : configuration 2 ; courbe c : configuration 3 ; courbe d : configuration 4 ; courbe e : configuration 5. Les courbes a et d, correspondant respectivement aux configurations 1 et 4, sont superposées.

Sur la figure 4A, on a également représenté une courbe 100%, pour laquelle $\frac{\sigma_{det}}{c_{det}} = 1$, formant une limite d'utilisation. On considère qu'il n'est pas envisageable de procéder à des mesures pour $\frac{\sigma_{det}}{c_{det}} \geq 1$.

D'après les résultats de la figure 4A, on observe que la meilleure configuration est la troisième configuration (courbe c), pour laquelle le ratio $\frac{\sigma_{det}}{c_{det}}$, correspondant à l'erreur relative de mesure, est minimal pour l'ensemble des concentrations $c_{det}$. La configuration optimale correspond à deux mesures successives, chacune étant effectuée par une démodulation du signal de détection selon la première harmonique.

Pour les concentrations élevées, la cinquième configuration (courbe e) présente également une performance correcte en matière d'erreur relative.

La figure 4B montre les intensités optimales $I_{0,1}$, $I_{0,2}$, $I_{1,1}$, $I_{1,2}$ pour la troisième configuration, en fonction de la concentration $c_{det}$. On observe que les intensités optimales, c'est-à-dire les intensités minimisant $\frac{\sigma_{det}}{c_{det}}$, varient en fonction de la concentration $c_{det}$.

Une information remarquable est que la composante continue $I_0$ du courant d'alimentation du laser varie entre deux valeurs optimales $I_{0,1}$, $I_{0,2}$ entre les deux configurations de mesure : une première valeur $I_{0,1}$ dépend de la concentration $c_{det}$, tandis que la deuxième valeur $I_{0,2}$ peut être considérée, au moins au premier ordre, comme indépendante de la concentration $c_{det}$.

Ainsi :

- pour $c_{det} \leq 0.02$ ppm, $I_{0,1} = I_{0,1,1}$ 0.425 A ;
- pour 0.02 ppm $\leq c_{det} \leq 200$ ppm, $I_{0,1} = I_{0,1,2} = 0.5$ A ;
- pour $c_{det} \geq 0.02$ ppm, $I_{0,1} = I_{0,1,3} = 0.6$ A.
- $I_{0,2} = 0.6$ A et cela quel que soit $c_{det}$, ce qui correspond à la puissance optique maximale.
- $I_{1,2} = I_{1,2} = 0.05$ A : Quel que soit $c_{det}$, ce qui correspond à l'amplitude de modulation maximale prise en compte.

Ainsi, durant une mesure, qui correspond ici, de façon arbitraire, à la première mesure, l'intensité optimale $I_{0,1}$ prend trois valeurs différentes $I_{0,1,1}$, $I_{0,1,2}$ et $I_{0,1,3}$ en fonction de la concentration $c_{det}$. On comprendra qu'il est équivalent que l'intensité $I_{0,1}$ soit constante et égale à 0.6 A et que l'intensité $I_{0,2}$ dépende de la concentration $c_{det}$.

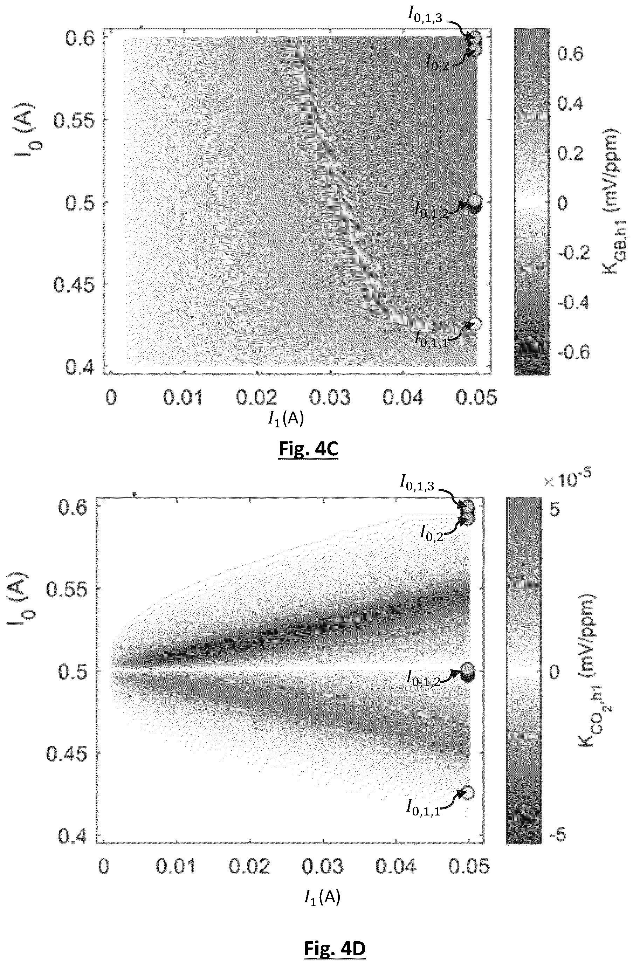

Sur les figures 4C et 4D, on a représenté les différentes valeurs des coefficients de réponse en fonction de l'intensité $I_0$ (axe des ordonnées) et de $I_1$ (axe des abscisses). On a également positionné les différentes valeurs $I_{0,1,1}$, $I_{0,1,2}$ et $I_{0,1,3}$ et $I_{0,2}$ décrites en lien avec la figure 4B, sachant que la valeur optimale de $I_1$ est de 0.05 mA pour chaque configuration de mesure.

On observe que la valeur $I_{0,2}$ optimale correspond à un coefficient de réponse $k_{det}$ maximale pour l'espèce gazeuse cible (GB) et un coefficient de réponse $k_{int}$ minimal pour $CO_2$.

Lorsque $c_{det} < 0.02$ ppm, les valeurs $I_{0,1} = I_{0,1,1}$ et $I_{0,2}$ correspondent à des courants dans lesquels les valeurs $k_{int}$ sont respectivement opposées. Le signal de détection étant formé à partir de la première harmonique, $k_{int}$ correspond à la dérivée de l'absorption de l'espèce interférente ($CO_2$) par rapport à la longueur d'onde. On présume la valeur de $I_{0,1,1}$ a été retenue car correspondant à une plage de valeurs de $k_{int}$ dans laquelle les dérivées $\left|\frac{\partial k_{det}}{\partial I_0}\right|$ et $\left|\frac{\partial k_{det}}{\partial I_1}\right|$ sont faibles, ce qui contribue à minimiser $\sigma_I$ (cf. expressions (6) à (8)).

Lorsque 0.02 ppm $\leq c_{det} \leq 200$ ppm, la valeur $I_{0,1} = I_{0,1,2}$ correspond à une valeur de $k_{int}$ proche de 0, et à un coefficient $k_{det}$ plus élevé que lorsque $c_{det} < 0.02$ ppm.

Lorsque $c_{det} \geq 200$ ppm, $I_{0,1} \approx I_{0,2}$.

Les résultats montrent que le recours à des configurations différentes est davantage adapté aux faibles concentrations $c_{det}$ (i-e $c_{det} \leq 200$ ppm) qu'aux concentrations élevées. Aux concentrations élevées, c'est-à-dire lorsque $c_{det} \geq 200$ ppm, on réalise deux mesures avec des mêmes paramètres, ce qui revient à obtenir un gain, en terme de rapport signal sur bruit, uniquement lié à la statistique de mesure.

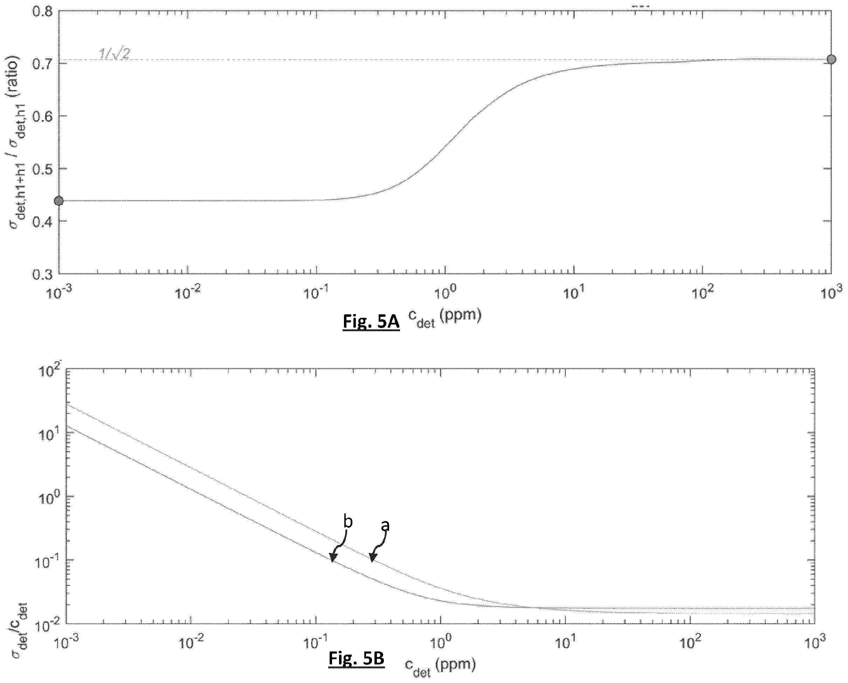

La figure 5A représente, pour différentes concentrations $c_{det}$ (axe des abscisses) un ratio entre :

- $\sigma_{det}(h_1, h_1)$ déterminé pour deux mesures basées sur la première harmonique, en prenant en compte les paramètres d'acquisition décrits en lien avec les figures 4A à 4D ;
- $\sigma_{det}(h_1)$ déterminé pour une seule mesure basée sur la première harmonique, en prenant en compte les paramètres d'acquisition optimaux pour chaque concentration $c_{det}$.

On observe que pour les fortes concentrations le ratio $\frac{\sigma_{det}(h_1,h_1)}{\sigma_{det}(h_1)}$ tend vers $\frac{1}{\sqrt{2}}$, ce qui correspond à une valeur due à la statistique de mesure : il est attendu que lorsque l'on double le nombre de mesures, selon les mêmes paramètres d'acquisition, le gain théorique en matière de rapport signal sur bruit est de $\sqrt{2}$.

Il est intéressant d'observer que pour les concentrations faibles, le ratio $\frac{\sigma_{det}(h_1,h_1)}{\sigma_{det}(h_1)}$ s'éloigne, en diminuant, de la valeur limite de $\frac{1}{\sqrt{2}}$, en particulier lorsque $c_{det} \leq 10$ ppm, et encore davantage lorsque $c_{det} \leq 1$ ppm. Cela montre que le fait d'effectuer deux acquisitions en prenant en compte deux paramètres différents apporte un gain supplémentaire par rapport au gain purement statistique.

La figure 5B montre l'évolution, en fonction de $c_{det}$ (axe des abscisses), du ratio $\frac{\sigma_{det}}{c_{det}}$ (axe des ordonnées) pour les configurations $(h_1, h_1)$, en prenant en compte des paramètres d'acquisition fixes pour l'ensemble des valeurs $c_{det}$. La courbe a correspond à une prise en compte des paramètres d'acquisition définis pour $c_{det} = 10^3$ ppm. La courbe b correspond à une prise en compte des paramètres d'acquisition définis pour $c_{det} = 10^{-3}$ ppm. On voit ici l'intérêt d'adapter les paramètres d'acquisition en fonction de la concentration $c_{det}$ : les paramètres optimaux à la concentration $10^3$ ppm (courbe a) entrainent une augmentation de l'erreur relative $\frac{\sigma_{det}}{c_{det}}$ pour les faibles concentrations $c_{det}$. Inversement, les paramètres optimaux à la concentration $10^{-3}$ ppm (courbe b) entrainent une augmentation de l'erreur relative $\frac{\sigma_{det}}{c_{det}}$ pour les fortes concentrations

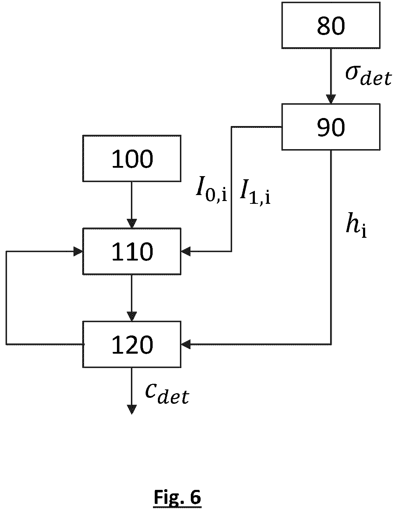

La figure 6 résume les principales étapes d'un procédé mettant en oeuvre l'invention.

Au cours d'une étape 100, un mélange gazeux, comportant au moins deux espèces gazeuses est introduit dans un détecteur photoacoustique.

Au cours d'une étape 110, le mélange gazeux est soumis à un nombre $N$ de mesures, chaque mesure étant paramétrée par des paramètres d'alimentation de la source laser. Dans cet exemple, les paramètres sont la composante continue $I_{0,i}$ et l'amplitude de la composante de modulation $I_{1,i}$.

Au cours d'une étape 120 : le signal de détection résultant du détecteur est démodulé, selon une harmonique préalablement définie. La démodulation permet d'obtenir une estimation de la concentration de chaque espèce gazeuse, ou d'au moins une espèce gazeuse présente dans le mélange.

Les étapes 110 et 120 sont mises en oeuvre à partir de paramètres d'acquisitions préalablement définis, par exemple pour différentes plages de concentrations attendues de chaque espèce gazeuse. Les paramètres d'acquisition sont établis lors de phases de calibration 80 et 90, mises en oeuvre par une unité de paramétrage.

Lors de la phase 80, on définit des valeurs ou des plages de valeurs de paramètres de mesure : paramètres d'illumination du laser, harmoniques utilisées pour la démodulation du signal de détection, Nombre maximal de mesure, plages de concentrations de chaque espèce gazeuse (ou valeur maximale de la concentration d'une espèce gazeuse). Cela permet d'obtenir une expression analytique de l'erreur de mesure $\sigma_{det}$, telle que (18).

L'étape 90 est une étape de minimisation de l'erreur de mesure $\sigma_{det}$, de façon à identifier les paramètres d'acquisition optimums, c'est-à-dire les paramètres d'alimentation du laser et/ou les paramètres de démodulation, en particulier le choix de l'harmonique. Cf. (19).

Il a été observé que les paramètres optimums peuvent varier en fonction de la concentration d'au moins une espèce à détecter, en l'occurrence $c_{det}$ dans l'exemple précédemment décrit. Soit l'on dispose d'un a priori sur la valeur de $c_{det}$ à mesurer, ou au moins sur une plage de valeurs, auquel cas les paramètres d'acquisition sont définis en fonction de cet a priori.

Lorsqu'on ne dispose d'aucun apriori, les étapes 110 à 120 peuvent être effectuées de façon itératives en ajustant, entre deux itérations successives, les paramètres d'acquisition en fonction de la concentration $c_{det}$ obtenue. Au cours d'une première itération, les paramètres d'acquisition sont sélectionnés de façon arbitraire ou aléatoire, ou sur la base d'un a priori. On obtient une première estimation de $c_{det}$. Les étapes 110 à 120 sont ensuite réitérées, de façon que la concentration $c_{det}$ d'une itération de rang q-1 est utilisée pour sélectionner les paramètres d'acquisition de l'itération suivante de rang q. Les itérations se succèdent jusqu'à un nombre prédéterminé d'itérations ou lorsque la valeur $c_{det}$ est stabilisée.

Bien que décrit en lien avec une espèce « cible » à détecter mélangée avec une espèce interférente, le procédé peut s'appliquer à une estimation des concentrations de deux espèces cibles différentes.

Dans ce cas, les paramètres sont établis pour optimiser les erreurs de détection des deux espèces gazeuses, en prenant en compte un compromis entre les erreurs de détection. La fonction de coût à minimiser peut par exemple combiner les erreurs de mesure de chaque espèce gazeuse.

**Revendications**

1.  Procédé de paramétrage d'un détecteur photoacoustique (1), le détecteur photoacoustique comportant :

    - une chambre de mesure (10), destinée à être occupée par un gaz, le gaz comportant au moins une espèce gazeuse cible dont on souhaite déterminer une concentration ;
    - une source laser (15), configurée pour illuminer le gaz, la source laser étant modulée en puissance d'émission et/ou en longueur d'onde, la puissance d'émission et sa modulation temporelle étant définies par au moins un paramètre d'illumination ;
    - un transducteur acoustique, configuré pour former un signal de détection ouplusieurs signaux de détection successifs, chaque signal de détection étant représentatif d'une modulation d'une pression dans la chambre de mesure, sous l'effet de la modulation de la source laser ;
    - une unité de traitement (20), configurée pour effectuer une démodulation de chaque signal de détection, selon un paramètre de démodulation, et estimer la concentration de l'espèce gazeuse cible;

    le procédé étant **caractérisé en ce que** :

    - chaque paramètre d'illumination et/ou chaque paramètre de démodulation forment des paramètres d'acquisition respectivement associés à chaque signal de détection ;
    - le procédé comporte une phase de paramétrage, mise en oeuvre par une unité de paramétrage, comportant les étapes suivantes :

        (a) définition d'une erreur de mesure en fonction d'au moins un paramètre d'acquisition ;
        (b) détermination d'au moins un paramètre d'acquisition minimisant l'erreur de mesure ;
        (c) pour chaque signal de détection, sélection du paramètre d'acquisition déterminée lors de l'étape (b).

2.  Procédé selon la revendication 1, dans lequel :

    - l'unité de traitement est configurée pour estimer la concentration de l'espèce gazeuse cible en utilisant plusieurs signaux de détection ;
    - au moins un paramètre d'acquisition d'un signal de détection est différent dudit paramètre d'acquisition d'un autre signal de détection.

3.  Procédé selon l'une quelconque des revendications 1 ou 2, dans lequel

    - lors de l'étape a), l'erreur de mesure dépend de la concentration de l'espèce gazeuse cible ;
    - lors de l'étape b), la minimisation de l'erreur est effectuée pour plusieurs plages de concentrations de l'espèce gazeuse cible ;
    - lors de l'étape c), au moins un paramètre d'acquisition est différent pour deux plages de concentrations de l'espèce gazeuse cible.

4.  Procédé selon l'une quelconque des revendications précédentes, dans lequel pour chaque signal de détection, les paramètres d'acquisition comportent au moins :

    - une puissance d'émission de la source laser ;
    - et/ou une amplitude de modulation de la puissance d'émission de la source laser ;
    - et/ou une harmonique de démodulation du signal de détection.

5.  Procédé selon la revendication 4, dans lequel l'harmonique de démodulation est choisie parmi une première harmonique, à la fréquence de modulation, ou une deuxième harmonique, à deux fois la fréquence de modulation.

6.  Procédé selon la revendication 5, dans lequel

    - l'unité de traitement prend en compte deux signaux de détection pour estimer la concentration de l'espèce gazeuse cible ;
- chaque signal de détection est démodulé selon la première harmonique ;
- les paramètres d'illumination pour chaque signal de détection sont différents.

7. Procédé selon l'une quelconque des revendications précédentes, dans lequel les étapes a) à c) sont mises en oeuvre en considérant au moins deux de signaux de détection démodulés par l'unité de traitement pour estimer la concentration de l'espèce gazeuse cible.

8. Procédé selon l'une quelconque des revendications précédentes, dans lequel l'étape c) est mise en oeuvre en utilisant des fonctions de réponse établies pour l'espèce gazeuse cible, en fonction d'au moins un paramètre d'acquisition.

9. Procédé selon l'une quelconque des revendications précédentes, dans lequel le gaz comporte l'espèce gazeuse cible et une autre espèce gazeuse, dite interférente, l'espèce gazeuse cible et l'espèce gazeuse interférente absorbant la lumière dans une même bande spectrale d'absorption.

10. Procédé selon la revendication 9, dans lequel l'erreur de mesure dépend de la concentration de l'espèce gazeuse cible et de la concentration de l'espèce gazeuse interférente.

11. Procédé selon l'une quelconque des revendications 9 ou 10, dans lequel l'étape c) est mise en oeuvre en utilisant des fonctions de réponse établies pour l'espèce gazeuse cible et pour l'espèce gazeuse interférente, en fonction d'au moins un paramètre d'acquisition.

12. Détecteur photoacoustique, comportant :

- une chambre de mesure, destinée à être occupée par un gaz, le gaz comportant au moins une espèce gazeuse cible dont on souhaite déterminer la concentration ;
- une source laser, configurée pour illuminer le gaz, la source laser étant modulée en puissance d'émission et/ou en longueur d'onde, la puissance d'émission de la source laser et sa modulation temporelle étant définies par au moins un paramètre d'illumination ;
- un transducteur acoustique, configuré pour former un signal de détection ou plusieurs signaux de détection successifs, chaque signal de détection étant représentatif d'une modulation d'une pression dans la chambre de mesure, sous l'effet de la modulation de la source laser ;
- une unité de traitement, configurée pour effectuer une démodulation de chaque signal de détection, de façon à estimer la concentration de l'espèce gazeuse cible, la démodulation du signal étant définie par un paramètre de démodulation ;
- le détecteur étant **caractérisé en ce qu'**il comporte une unité de paramétrage, configurée pour mettre en oeuvre les étapes a) à c) d'un procédé selon l'une quelconque des revendications précédentes, pour définir au moins un paramètre d'acquisition, choisi parmi un paramètre d'illumination et/ou un paramètre de démodulation.

13. Détecteur photoacoustique, comportant :

- une chambre de mesure, destinée à être occupée par un gaz, le gaz comportant au moins une espèce gazeuse cible dont on souhaite déterminer la concentration ;
- une source laser, configurée pour illuminer le gaz, la source laser étant modulée en puissance d'émission et/ou en longueur d'onde, la puissance d'émission la source laser et sa modulation temporelle étant définies par au moins un paramètre d'illumination ;
- un transducteur acoustique, configuré pour former plusieurs signaux de détection successifs, chaque signal de détection étant représentatif d'une modulation d'une pression dans la chambre de mesure, sous l'effet de la modulation de la source laser ;
- une unité de traitement, configurée pour effectuer une démodulation de chaque signal de détection, pour estimer la concentration de l'espèce gazeuse cible, la démodulation du signal étant définie par un paramètre de démodulation ;
- le détecteur étant **caractérisé en ce qu'**un paramètre d'acquisition, choisi parmi un paramètre d'illumination et/ou un paramètre de démodulation est différent pour deux signaux de détection successifs.

14. Procédé d'estimation d'une concentration d'une espèce gazeuse cible, à l'aide d'un détecteur photoacoustique selon l'une quelconque des revendications 12 ou 13, le procédé comportant :

- (i) illumination du gaz occupant la chambre de mesure à l'aide de la source laser, selon un paramètre d'illumination ;
- (ii) durant l'étape (i), formation d'un signal de détection par le transducteur acoustique ;
- (iii) démodulation d'un ou plusieurs signaux de détection, chaque signal de détection étant démodulé selon un paramètre de démodulation, de façon à estimer une concentration de l'espèce gazeuse cible ;
le procédé étant tel que :

- chaque paramètre d'illumination et chaque paramètre de démodulation forment des paramètres d'acquisition de chaque signal de détection ;
- les paramètres d'acquisition de chaque signal de détection sont définis pour différentes plages de concentration de l'espèce gazeuse cible ;

le procédé comporte une réitération des étapes (i) à (iii), de façon que

- lors d'une première itération, les paramètres d'acquisition sont initialisés arbitrairement ou selon un a priori relatif à la concentration de l'espèce gazeuse cible ;
- lors d'une deuxième itération, les paramètres d'acquisition sont sélectionnés en fonction de la concentration de l'espèce gazeuse cible résultant de l'itération précédente.

**Fig. 1**

**Fig. 2A**

**Fig. 2B**

**Fig. 3**

**Fig. 4A**

**Fig. 4B**

**Fig. 4C**

**Fig. 4D**

**Fig. 5A** $c_{det}$ (ppm)

**Fig. 5B** $c_{det}$ (ppm)

EP 4 597 076 A1

**Fig. 6**

Europäisches
Patentamt

European
Patent Office

Office européen
des brevets

# RAPPORT DE RECHERCHE EUROPEENNE

Numéro de la demande

EP 25 15 4898

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | HUAN BINGLIAN ET AL: "Sensitivity dependence of optical parameters in a photoacoustic cell analyzed with a 2-D thermoelastic approximation", OPTICS COMMUNICATIONS, ELSEVIER, AMSTERDAM, NL, vol. 497, 2 juin 2021 (2021-06-02), XP086692612, ISSN: 0030-4018, DOI: 10.1016/J.OPTCOM.2021.127171 [extrait le 2021-06-02] * le document en entier * | 1-14 | INV. G01N21/17 G01N29/24 |
| X | LI YAFEI ET AL: "Highly sensitive near-infrared gas sensor system using a novel H-type resonance-enhanced multi-pass photoacoustic cell", MEASUREMENT, INSTITUTE OF MEASUREMENT AND CONTROL. LONDON, GB, vol. 220, 25 juillet 2023 (2023-07-25), XP087393402, ISSN: 0263-2241, DOI: 10.1016/J.MEASUREMENT.2023.113380 [extrait le 2023-07-25] | 13 | |
| A | * le document en entier * * Sections 3.2 et 4. * | 1-12,14 | DOMAINES TECHNIQUES RECHERCHES (IPC) G01N |
| A | EP 4 009 035 A1 (FRAUNHOFER GES FORSCHUNG [DE]) 8 juin 2022 (2022-06-08) * alinéas [0051] - [0060], [0068]; figure * | 1-14 | |

-/--

Le présent rapport a été établi pour toutes les revendications

| Lieu de la recherche | Date d'achèvement de la recherche | Examinateur |
|---|---|---|
| Munich | 23 mai 2025 | Riblet, Philippe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

page 1 de 2

| | Europäisches Patentamt<br>European Patent Office<br>Office européen des brevets | **RAPPORT DE RECHERCHE EUROPEENNE** | Numéro de la demande<br>EP 25 15 4898 |

## DOCUMENTS CONSIDERES COMME PERTINENTS

| Catégorie | Citation du document avec indication, en cas de besoin,<br>des parties pertinentes | Revendication concernée | CLASSEMENT DE LA DEMANDE (IPC) |
|---|---|---|---|
| X | HOLTHOFF E L ET AL: "Development of a MEMS-Scale Photoacoustic Chemical Sensor Using a Quantum Cascade Laser",<br>IEEE SENSORS JOURNAL, IEEE, USA,<br>vol. 10, no. 3,<br>24 février 2010 (2010-02-24), pages 572-577, XP011290007,<br>ISSN: 1530-437X, DOI:<br>10.1109/JSEN.2009.2038665 | 13 | |
| A | * le document en entier *<br>----- | 1-12,14 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Munich | 23 mai 2025 | Riblet, Philippe |

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 15 4898

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-05-2025

| Document brevet cité au rapport de recherche | Date de publication | Membre(s) de la famille de brevet(s) | Date de publication |
|---|---|---|---|
| EP 4009035 A1 | 08-06-2022 | AUCUN | |

Pour tout renseignement concernant cette annexe : voir Journal Officiel de l'Office européen des brevets, No.12/82

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HUAN BINGLIAN et al.** Sensitivity dependence of optical parameters in a photoacoustic cell analyzed with a 2-D thermoelastic approximation. *Optics communications*, 02 June 2021, vol. 497
- **LI YAFEI et al.** Highly Sensitve near-infrared gas sensor system using a novel H-type resonance-enhanced multip-pass photoacoustic cell. Institute of measurement and control, 25 July 2023, vol. 220

- **HOLTHOFF E. et al.** Development of a MEMS-Scale Photoacouctis chemical sensor using a quantum cascade laser. *IEEE Sensors journal, USA*, 24 February 2010, vol. 10 (3)